# EUROPÄISCHE PATENTSCHRIFT

(11) **EP 1 893 956 B1**
(45) Veröffentlichungstag und Bekanntmachung des Hinweises auf die Patenterteilung: **16.03.2011**
(21) Anmeldenummer: 06724405.3
(22) Anmeldetag: 19.04.2006
(51) Int. Cl.: G01J 1/58

(54) **BILDWANDLER MIT EINER BEHEIZBAREN WANDLERSCHICHT**
IMAGE CONVERTER WITH HEATED CONVERTER LAYER
CONVERTISSEUR D'IMAGES POURVU D'UNE COUCHE DE CONVERSION POUVANT ETRE CHAUFFEE

(30) Priorität: 23.04.2005 DE 102005018965
(43) Veröffentlichungstag der Anmeldung: 05.03.2008
(73) Patentinhaber: Cinogy GmbH, 37115 Duderstadt (DE)
(72) Erfinder: KILLICH, Frank, 37085 Göttingen (DE); WIENEKE, Stephan, 37079 Göttingen (DE); VIÖL, Wolfgang, 37139 Adelebsen (DE)
(74) Vertreter: Rehberg Hüppe + Partner
(86) Internationale Anmeldenummer: PCT/EP2006/003547
(87) Internationale Veröffentlichungsnummer: WO 2006/114217

(56) Entgegenhaltungen:
- US-A- 3 327 120
- US-A- 3 832 557

## Beschreibung

Die Erfindung betrifft einen Bildwandler mit den Merkmalen des Oberbegriffs des Patentanspruchs 1.

Ein derartiger Bildwandler wird eingesetzt, um eine Intensitätsverteilung einer elektromagnetischen Strahlung, die als solche nicht ohne weiteres für das menschliche Auge sichtbar ist und/oder nicht ohne weiteres dem menschlichen Auge zugemutet werden kann und/oder nicht ohne weiteres aufgezeichnet werden kann und/oder einen sehr hohen Aufwand bei der direkten Aufzeichnung oder Auswertung erfordert, in eine flächige Intensitätsverteilung umzuwandeln, bei der diese Probleme nicht bestehen.

Ein Bildwandler kann als solcher verwendet werden, um die jeweilige Intensitätsverteilung für das menschliche Auge sichtbar zu machen. Er kann aber auch einen Bildsensor zur Aufzeichnung der umgewandelten Intensitätsverteilung aufweisen.

### STAND DER TECHNIK

Ein Bildwandler zur Verstärkung der Lichtstärke einer Intensitätsverteilung einer elektromagnetischen Strahlung ist aus der DE-PS 535 208 bekannt. Als Wandlerschicht ist eine fotoelektrische Schicht vorgesehen, aus der die elektromagnetische Strahlung Elektronen freisetzt und die zugleich als Kathode einer angrenzenden flächigen Röhre dient. In der Röhre werden die freigesetzten Elektronen gegen eine Anode beschleunigt, die aufgrund der auftreffenden Elektronen Licht aussendet, das zur Belichtung einer angrenzenden fotografischen Schicht verwendet werden kann. Die spektralen Eigenschaften der fotoelektrischen Schicht bestimmen dabei den spektralen Empfindlichkeitsbereich des Bildwandlers, der auf maximal 200 bis 1300 nm beschränkt und häufig deutlich schmaler ist,

Der aus der DE-PS 535 208 bekannte Bildwandler kommt z. B. in so genannten Nachtsichtgeräten zur Anwendung kommen. Mit Nachtsichtgeräten wird für das menschliche Auge nicht sichtbares Infrarotlicht oder für das menschliche Auge unzureichendes Restlicht sichtbar gemacht, wobei die beschleunigten und üblicherweise zusätzlich verstärkten Elektronen mit einem Lumineszenzschirm aus im sichtbaren Bereich lumineszierendem Material aufgefangen werden. Hier lösen die Elektronen Lumineszenz aus, deren Verteilung über dem Lumineszenzschirm der auf die fotoelektrische Schicht einfallenden Intensitätsverteilung des infraroten bzw. Restlichts entspricht. Der Lumineszenzschirm kann direkt mit dem Auge betrachtet oder auf ein Bildsensorarray abgebildet werden.

Bei einer von der Firma PROXITRONIC in Darmstadt entwickelten Abwandlung des aus der DE-PS 535 208 bekannten Bildwandlers wird sichtbar zu machendes Licht auf eine flächige Röhre abgebildet, in der ein geeignetes Gas unter einer Hochspannung steht. Das in die Röhre einfallende Licht führt zu einer Ionisierung des Gases. Durch die angelegte Hochspannung werden die Elektronen des ionisierten Gases auf einen Lumineszenzschirm beschleunigt und lösen hier Lumineszenz aus, deren Verteilung über dem Lumineszenzschirm der auf die flächige Röhre einfallenden Intensitätsverteilung des sichtbar zu machenden Lichts entspricht.

Alle auf dem aus der DE-PS 535 208 bekannten Grundprinzip basierenden Bildwandler sind nur für sehr geringe Intensitäten der betrachteten elektromagnetischen Strahlung vorgesehen und deshalb für die Sichtbarmachung einer Intensitätsverteilung einer stärkeren elektromagnetischen Strahlung ungeeignet. Um sie hierfür dennoch zu ertüchtigen, muss die einfallende elektromagnetische Strahlung sehr stark künstlich abgeschwächt werden. Hierdurch geht jedoch die Empfindlichkeit des Bildwandlers für schwächere Intensitäten verloren.

Aus der US 2,572,494 ist ein weiterer nach dem aus der DE-PS 535 203 bekannten Grundprinzip arbeitender Bildwandler bekannt, der die Merkmale des Oberbegriffs des Patentanspruchs 1 aufweist, indem eine Heizeinrichtung vorgesehen ist, um die fotoelektrische Schicht, aus der die elektrische Strahlung Elektronen freisetzt, mit einer Heizeinrichtung auf eine Temperatur in dem Bereich von 40°C oder 50 °C anzuheben. Bei dieser Temperatur soll der Elektronenstrom durch die Beschleunigerröhre in der Größenordnung von 10⁻¹⁰A/cm² liegen. D. h., die Temperaturerhöhung stellt einen Mindestelektrodenstrom durch die Röhre bereit.

Es sind auch Bildwandler bekannt, bei denen die elektromagnetische Strahlung, deren Intensitätsverteilung sichtbar zu machen ist, direkt auf einen Lumineszenzschirm als Wandlerschicht fällt. Dabei kann die elektromagnetische Strahlung nicht nur Lumineszenz anregen, sondern alternativ auch eine vorhandene Lumineszenz durch stimulierte Emission abregen, wodurch ein Negativbild der interessierenden Intensitätsverteilung entsteht. Die Anregung der Lumineszenz kann neben einer quantenoptischen Anregung eines Lumineszenzschirms auch auf einer quantenoptischen oder thermischen Stimulation eines z. B. durch kurzwellige Strahlung voraufgeladenen Lumineszenzschirms beruhen. Alle Lumineszenzschirme mit durch quantenoptische Effekte an- oder abgeregter Lumineszenz weisen nur einen schmalbandigen spektralen Empfindlichkeitsbereich auf.

Aus der US 3,832,557 ist ein weiterer Bildwandler mit den Merkmalen des Oberbegriffs des Patentanspruchs 1 bekannt, bei dem die Wandlerschicht aus einem Limunophor besteht, dessen Lumineszenzeigenschaften, insbesondere dessen Intensität oder Farbe, sich mit Änderungen seiner Temperatur ändern. Durch die Einstellung der Temperatur der Wandlerschicht kann die Empfindlichkeit des bekannten Bildwandlers auf verschiedene Intensitäten der einfallenden elektromagnetischen Strahlung abgestimmt werden.

Aus der US 3,327,120 ist noch ein weiterer Bildwandler mit den Merkmalen des Oberbegriffs des Patentanspruchs 1 bekannt. Hier besteht die Wandlerschicht aus einem photochromen Glas, das mit ultraviolettem Licht in einen dunklen Zustand überführt wird. Infrarotlicht, das auf die Wandlerschicht projiziert wird, lässt das photochrome Glas lokal hell werden. Dabei ist es mit Hilfe einer Heizeinrichtung möglich, die Temperatur der Wandlerschicht so weit anzuheben, dass bei bewegten, Infrarotlicht abstrahlenden Objekten ein Nachleuchten der Wandlerschicht erfolgt.

Bildwandler mit einem so genannten Mikrobolometerarray nutzen temperaturabhängige elektrische Eigenschaften einzelner Elemente des Mikrobolometerarrays aus, um eine von einer auf das Mikrobolometerarray einfallenden elektromagnetischen Strahlung hervorgerufene Temperaturverteilung über den Elementen des Mikrobolometerarrays zu erfassen.

Zur Sichtbarmachung von Temperaturverteilungen über Oberflächen ist es bekannt, thermochrome Farbschichten, z. B. aus Flüssigkristallen, auf die Oberflächen aufzubringen.

Bei einem aus der DE 101 58 859 B4 bekannten Bildwandler ist die Wandlerschicht die Reflektionsbeschichtung eines Laserspiegels. Die von der einfallenden und von der Reflektionsschicht im Wesentlichen reflektierten Laserstrahlung hervorgerufene Temperaturverteilung über der Reflektionsschicht wird dadurch sichtbar gemacht, dass die Reflektionsschicht auf einer sich temperaturabhängig ausdehnenden Ausdehnschicht angeordnet ist und die hieraus resultierende Deformationen der Reflektlonsschicht aufgrund von lokalen Wärmeausdehnungen der Ausdennschicht mit einem Laserinterferrometer erfasst werden. Ein direktes Bild der Intensitätsverteilung der Laserstrahlung wird auf diese Weise nicht gewonnen, und es ist ein erheblicher Aufwand zu betreiben, um die sich auf sehr niedrigem Niveau abspielenden lokalen Wärmeausdehnungen der Ausdehnschicht überhaupt zu erfassen. Umgekehrt ist der bekannte Bildwandler mit den Merkmalen des Oberbegriffs des Patentanspruchs 1 für eine große Bandbreite an Intensitäten der einfallenden elektromagnetischen Strahlung einschließlich Laserstrahlung sehr hoher lokaler Intensität geeignet, und er weist einen großen spektralen Empfindlichkeitsbereich auf.

### AUFGABE DER ERFINDUNG

Der Erfindung liegt die Aufgabe zugrunde, einen Bildwandler mit den Merkmalen des Oberbegriffs des Patentanspruchs 1 aufzuzeigen, der in Bezug auf die einfallende elektromagnetische Strahlung eine große mögliche Intensitätsbandbreite und einen großen spektralen Empfindlichkeitsbereich aufweist und der zugleich ohne großen Aufwand zu einem direkten Bild der Intensitätsverteilung der elektromagnetischen Strahlung führt, das direkt mit dem Auge betrachtet, und/oder ebenfalls mit geringem Aufwand durch einen Bildsensor erfasst werden kann.

### LÖSUNG

Die Aufgabe der Erfindung wird durch einen Bildwandler mit den Merkmalen des unabhängigen Patentanspruchs 1 gelöst. Bevorzugte Ausführungsformen des neuen Bildwandlers sind in den Unteransprüchen 2 bis 17 definiert.

### BESCHREIBUNG DER ERFINDUNG

Bei dem neuen Bildwandler ist eine Heizeinrichtung zum Erhöhen der Temperatur der Wandlerschicht vorgesehen. Durch das Erhöhen der Temperatur der Wandlerschicht wird die von der Wandlerschicht ausgehende Wärmestrahlung zu kürzeren Wellenlängen hin verschoben. Die Verschiebung geht bereits bei einer Temperaturerhöhung der Wandlerschicht auf ca. 500 bis 600 K so weit, dass die von der Wandlerschicht ausgehende Wärmestrahlung mit einem üblichen Halbleiterbildsensorarray erfasst werden kann. Eine noch etwas darüber hinausgehende Temperaturerhöhung führt dazu, dass die Wärmestrahlung von der Wandlerschicht auch für das menschliche Auge sichtbar wird. Dadurch wird auch die von der einfallenden elektromagnetischen Strahlung hervorgerufene Temperaturverteilung über der Wandlerschicht sichtbar, die der mit der Heizeinrichtung hervorgerufenen Temperaturerhöhung der Wandlerschicht überlagert ist.

Um zeitliche Veränderungen der Intensitätsverteilung der elektromagnetischen Strahlung, die auf die Wandlerschicht einfällt, zu erkennen, ist es ausreichend, wenn die Heizeinrichtung ohne die sichtbar zu machende Intensitätsverteilung der elektromagnetischen Strahlung eine zeitlich konstante oder in definierter Weise mit der Zeit variierte Temperaturverteilung über der Wandlerschicht bewirkt. Jede Änderung bei der Wärmestrahlung von der Wandlerschicht ist dann auf eine Änderung der Intensitätsverteilung der auf die Wandlerschicht einfallenden elektromagnetischen Strahlung zurückzuführen.

Wenn die Heizeinrichtung ohne die sichtbar zu machende Intensitätsverteilung eine homogene Temperaturverteilung über der Wandlerschicht bewirkt, kann durch Betrachten der Wandlerschicht bzw. der von dieser abgestrahlten Wärmestrahlung direkt die Intensitätsverteilung der elektromagnetischen Strahlung erfasst werden. Jede lokale Erhöhung der Intensität der Wärmestrahlung von der Wandlerschicht entspricht einem Intensitätsanteil, der auf diese einfallende elektromagnetische Strahlung zurückgeht.

Bei dem neuen Bildwandler ist es nicht erforderlich, dass die Heizeinrichtung die Temperatur der Wandlerschicht so weit erhöht, dass Wärmestrahlung von der Wandlerschicht sichtbar ist, auch ohne dass die elektromagnetische Strahlung einfällt, deren Intensitätsverteilung sichtbar zu machen ist. Entscheidend ist nur, dass dort, wo relevante Intensitäten der einfallenden elektromagnetischen Strahlung eine Temperaturerhöhung der Wandlerschicht bewirken, erfassbare Wärmestrahlung von der Wandlerschicht ausgeht. Mit erfassbarer Wärmestrahlung ist damit solche Wärmestrahlung gemeint, die entweder direkt für das menschliche Auge sichtbar ist, oder mit einfachen Bildsensorarrays, d. h. direkt und ohne einen zwischengeschalteten Bildverstärker, erfasst werden kann.

Um den neuen Bildwandler für sehr unterschiedliche Intensitäten der einfallenden elektromagnetischen Strahlung verwenden zu können, ist es vor diesem Hintergrund bevorzugt, wenn die Heizleistung der Heizeinrichtung, die die Temperatur der Wandlerschicht erhöht, einstellbar ist. Bei sehr kleinen Intensitäten der einfallenden elektromagnetischen Strahlung ist es häufig sinnvoll, die Wandlerschicht weiter aufzuheizen als im Falle einer elektromagnetischen Strahlung mit einer sehr hohen Intensität, die also nur eine geringe Unterstützung benötigt, um die Wandlerschicht bis auf Temperaturen aufzuheizen, bei der sie sichtbare bzw. erfassbare Wärmestrahlung emittiert. Zur vollständigen Erfassung der Intensitätsverteilung der einfallenden elektromagnetischen Strahlung kann die Temperatur der Wandlerschicht auch nacheinander auf unterschiedliche Temperaturen aufgeheizt werden, um nacheinander unterschiedliche Intensitätsbereiche der einfallenden elektromagnetischen Strahlung optimal auszusteuern.

Die Heizeinrichtung des neuen Bildwandlers kann als Heizstrahlungsquelle ausgebildet sein, so dass sie die Temperatur der Wandlerschicht durch Strahlungsenergie erhöht, die ebenso wie die einfallende elektromagnetische Strahlung, deren Intensität gemessen werden soll, von der Wandlerschicht oder einer hierzu parallel angeordneten weiteren Schicht in Wärme umgewandelt wird. Die Wellenlänge, bei der die Heizstrahlungsquelle Strahlungsenergie abgibt, kann in den sichtbaren oder unsichtbaren Bereich elektromagnetischer Strahlung fallen und dabei auch mit der Wellenlänge der elektromagnetischen Strahlung, deren Intensitätsverteilung sichtbar zu machen ist, identisch sein. Konkret kann die Heizstrahlungsquelle auch eine Mikrowellenquelle oder eine Quelle für ein Wirbelströme in der Wandlerschicht induzierendes magnetisches Wechselfeld sein. Alternativ kann die Heizstrahlungsquelle auch eine Schallwelle, z. B. eine Ultraschallwelle, zum Aufheizen der Wandlerschicht abstrahlen.

In einer besonders bevorzugten Ausführungsform des neuen Bildwandlers weist die Heizeinrichtung ein Widerstandsheizelement auf, das beim Induzieren von Wirbelströmen oder bei Anlegen einer äußeren Spannung elektrische Energie in Wärme umwandelt, um die Temperatur der Wandlerschicht zu erhöhen. Dabei ist das Widerstandsheizelement vorzugsweise entweder parallel zu der Wandlerschicht anzuordnen, wobei es in möglichst direktem Kontakt mit der Wandlerschicht stehen sollte, oder die Wandlerschicht ist selbst als das Widerstandsheizelement auszubilden.

Die Wandlerschicht kann auch die einfallende elektromagnetische Strahlung entweder selbst in die deren Intensitätsverteilung entsprechende Temperaturverteilung umwandeln, oder zu diesem Zweck ist eine mit der Wandlerschicht in Kontakt stehende separate Absorptionsschicht vorgesehen. Bei einem mehrschichtigen Aufbau ist die Schicht als Wandlerschicht anzusehen, von der die sichtbare bzw. leicht erfassbare Wärmestrahlung ausgeht, und es ist klar, dass es auf die Temperaturerhöhung dieser Wandlerschicht mit der Heizeinrichtung ankommt. In aller Regel sind die hier betrachteten Schichten aber so dicht angeordnet, dass sie gemeinsam durch die Heizeinrichtung bzw. die in Wärme umgewandelte einfallende elektromagnetische Strahlung erwärmt werden.

Die Wandlerschicht des neuen Bildwandlers kann auch auf einem Trägersubstrat oder zwischen zwei Trägersubstraten angeordnet sein, die zur gezielten Wärmeableitung aus der Wandlerschicht genutzt werden, um beispielsweise bei hohen Intensitäten der einfallenden elektromagnetischen Strahlung einen Wärmestau in der Wandlerschicht zu verhindern, oder um die Wandlerschicht gegenüber einem Gas in seiner Umgebung zwecks Vermeidung von Hitzeschlieren in dem Gas thermisch zu isolieren. Wenn in dem letzten Fall die Wandlerschicht durch das Trägersubstrat betrachtet werden oder die elektromagnetische Strahlung durch das Trägersubstrat einfallen soll, muss dieses für die Wärmestrahlung der Wandlerschicht bzw. die einfallende elektromagnetische Strahlung transparent sein und darf selbst keine störende Wärmestrahlung abgeben. Als Material für ein solches Substrat ist beispielsweise Quarz geeignet.

Die Wandlerschicht kann aber auch beidseitig von Gas oder Vakuum begrenzt sein, so dass der Bildwandler im Bereich der Wandlerschicht einen vollständig einschichtigen Aufbau aufweist.

Je nach Aufbau des neuen Bildwandlers, d. h. insbesondere in Bezug auf seine thermische Kapazität sind die zeitliche Auflösung des Bildwandlers bestimmende Zeitkonstanten (Halbwertszeiten) bis hinab zu 10 ms realisierbar.

Alternativen zur transparenten thermischen Isolierung zwecks Vermeidung von Hitzeschlieren oder anderen inhomogenen thermischen Effekten aufgrund von Konvektion in einem an die Wandlerschicht angrenzenden Gas sind eine überlagerte schnelle Zwangsbewegung des Gases und/oder eine horizontale Ausrichtung der Wandlerschicht, so dass die Konvektion des Gases über ihre Fläche zumindest annähernd homogen auftritt.

Die Absorptionsschicht des neuen Bildwandlers kann verspiegelt sein, um einen wesentlichen Anteil der einfallenden elektromagnetischen Strahlung zurückzureflektieren. Dies ist insbesondere dann sinnvoll, wenn die einfallende elektromagnetische Strahlung eine sehr große Intensität aufweist und ein kleiner Anteil dieser Intensität für die Sichtbarmachung deren Intensitätsverteilung ausreichend ist, oder wenn die Sichtbarmachung der Intensitätsverteilung der elektromagnetischen Strahlung bei gleichzeitiger Nutzung der elektrischen Strahlung zu anderen Zwecken erfolgen soll. Konkret kann die Absorptionsschicht einen Laserspiegel ausbilden.

Bei dem neuen Bildwandler kann ein Bildsensorarray vorgesehen sein, auf das ein Wärmebild der Wandlerschicht abgebildet wird. Das Bildsensorarray kann in geringem Abstand parallel zu der Wandlerschicht angeordnet sein, um ohne Zwischenschaltung einer Optik die Wärmestrahlung von der Wandlerschicht direkt aufzuzeichnen. Bevorzugt ist es aber, wenn eine Optik vorgesehen ist, die das Wärmebild der Wandlerschicht auf das Bildsensorarray abbildet. Hierdurch wird typischerweise auch der Abstand des Bildsensorarrays von der Wandlerschicht erhöht und damit die Gefahr eines ungewollten Erwärmens des Bildsensorarrays reduziert. Das Erwärmen eines Bildsensorarrays führt zumindest zu einer Erhöhung des thermischen Rauschens. Bei einer extremen Temperaturerhöhung kann es auch zu einer Zerstörung des Bildsensorarrays kommen, welches typischerweise auf Halbleitertechnik basiert.

Zur thermischen Abschirmung des Bildsensorarrays von der Wandlerschicht kann zwischen der Wandlerschicht und dem Bildsensorarray ein optisches Wärmeschutzfilter vorgesehen sein. Dieses optische Wärmeschutzfilter kann Wärmestrahlung von der Wandlerschicht mit größerer Wellenlänge, als sie für das Bildsensorarray sichtbar ist, von dem Bildsensorarray abschirmen.

Das Bildsensorarray kann auf der Seite der Wandlerschicht angeordnet sein, von der die elektromagnetische Strahlung mit der interessierenden Intensitätsverteilung einfällt. Bevorzugt ist es jedoch häufig, wenn das Bildsensorarray in Richtung der einfallenden Intensitätsverteilung hinter der Wandlerschicht vorgesehen ist. Dabei können der Bildwandler, eine etwaige separate Absorptionsschicht, das Bildsensorarray und auch die Heizeinrichtung für die Wandlerschicht in einem Gehäuse angeordnet sein, das Umgebungslicht von der Absorptionsschicht und insbesondere von dem Bildsensorarray abschirmt.

Wenn die Heizeinrichtung für die Erhöhung der Temperatur der Wandlerschicht eine Heizstrahlenquelle aufweist, kann diese sowohl auf der Seite der Wandlerschicht angeordnet sein von der die elektromagnetische Strahlung einfällt, als auch auf deren anderen Seite.

Das Bildsensorarray des neuen Bildwandlers kann ein herkömmlicher und zu geringen Kosten verfügbarer CCD-Chip sein. Ein solcher CCD-Chip weist eine viel größere räumliche Auflösung als die im Stand der Technik bekannten Bildwandler aus Nachtsichtgeräten auf und ist gleichzeitig um ein Vielfaches kostengünstiger.

Die extreme Breitbandigkeit des spektralen Empfindlichkeitsbereichs des neuen Bildwandlers von 100 bis 100.000 nm kann durch eine Variation der spektralen Empfindlichkeit der Absorptionsschicht oder durch der Absorptionsschicht vorgeschaltete Vorfilter auf einen frei wählbaren schmalbandigeren Bereich eingeschränkt werden.

Mit dem neuen Bildwandler ist es insbesondere möglich das Intensitätsprofil eines hochenergetischen Laserstrahls vollständig zu erfassen. Hierzu ist es notwendig neben den Intensitätsmaxima auch solche Bereiche der Intensitätsverteilung zu erfassen, in denen eine deutlich hinter den Intensitätsmaxima zurückbleibende Intensität vorliegt. Nur bei vollständiger Erfassung des Intensitätsprofils eines Laserstrahls ist es beispielsweise möglich, dessen wesentliche Strahlparameter, so wie dessen Strahlschwerpunkt, exakt zu bestimmen.

Ein weiterer besonderer Vorteil der Erfindung ist, dass der neue Bildwandler eine nahezu beliebig große Wandlerfläche aufweisen kann. Damit ist auch eine besonders hohe räumliche Auflösung bei der Sichtbarmachung der Intensitätsverteilung der einfallenden elektromagnetischen Strahlung möglich.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand in den Figuren dargestellter bevorzugter Ausführungsbeispiele weiter erläutert und beschrieben.

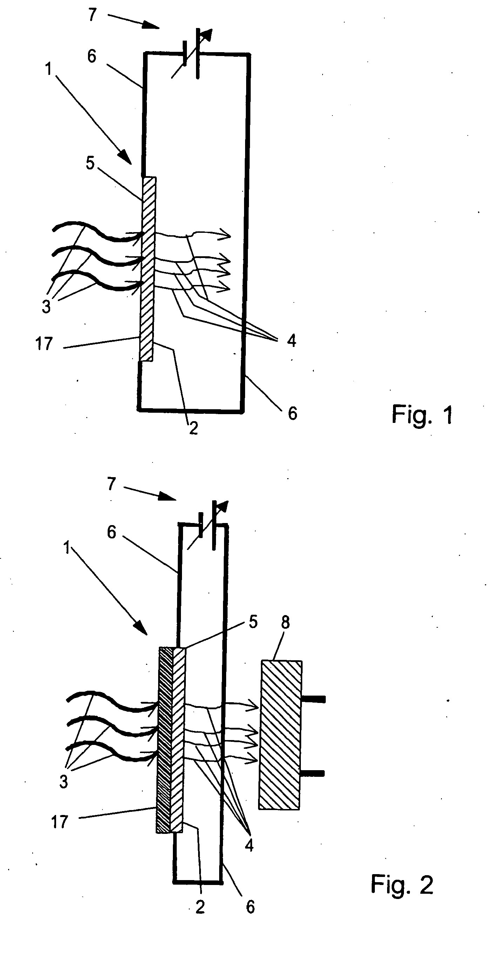

Die **Fig. 1 bis 7** zeigen jeweils einen schematischen Längsschnitt durch eine von sechs Ausführungsformen des neuen Bildwandlers.

### FIGURENBESCHREIBUNG

Der in **Fig. 1** dargestellte Bildwandler 1 besteht aus einer Wandlerschicht 2, die hier zugleich als Absorptionsschicht 17 dient, um eine einfallende elektromagnetische Strahlung 3 in Wärme umzuwandeln. Dabei bildet sich eine Temperaturverteilung über der Wandlerschicht 2 aus, die einer Intensitätsverteilung der elektromagnetischen Strahlung 3 über der Wandlerschicht 2 entspricht. Um diese Temperaturverteilung in Form von Wärmestrahlung 4 von der Wandlerschicht 2 für das menschliche Auge sichtbar zu machen, ist die Wandlerschicht 2 als Widerstandsheizelement 5 ausgebildet und über elektrische Anschlüsse 6 mit einer einstellbaren Spannungsquelle 7 verbunden. Mit der Spannungsquelle 7 wird ein Strom durch das Widerstandsheizelement 5 hervorgerufen, der zu einer homogenen Temperaturerhöhung des Widerstandsheizelements 5, d. h. der Wandlerschicht 2 führt. Diese Temperaturerhöhung wird so weit getrieben, dass die Wärmestrahlung 4 mit ausreichender Intensität in den für das menschliche Auge sichtbaren Wellenlängenbereich gelangt. Damit wird die Intensitätsverteilung der elektromagnetischen Strahlung 3 für das menschliche Auge sichtbar, weil sie der homogenen Temperaturerhöhung der Wandlerschicht 2 mit Hilfe der Spannungsquelle 7 überlagert ist. Alle Intensitätsspitzen der sichtbaren Wärmestrahlung 4 sind daher auf die Intensitätsverteilung der elektromagnetischen Strahlung 3 über der Wandlerschicht 2 zurückzuführen. Dabei kann die Spannungsquelle 7 auch so eingestellt werden, dass allein aufgrund der von ihr hervorgerufenen Temperaturerhöhung der Wandlerschicht 2 noch keine Wärmestrahlung 4 von der Wandlerschicht 2 emittiert wird, die für das menschliche Auge sichtbar ist, und erst die zusätzliche Temperaturerhöhung aufgrund der einfallenden elektrischen Strahlung 3 zu sichtbarer Wärmestrahlung 4 führt. In einem konkreten Beispiel kann die Wandlerschicht 2 bzw. das Widerstandsheizelement 5 aus einer Folie aus Konstantan ausgebildet sein.

Der Bildwandler gemäß der **Fig. 2** unterscheidet sich von der Ausführungsform gemäß Fig. 1 in Folgendem: Die Wandlerschicht 2 ist hier nicht selbst als Absorptionsschicht 17 vorgesehen, sondern die Absorptionsschicht 17 ist im direkten Kontakt zu der Wandlerschicht 2 parallel zu dieser angeordnet. Von der Absorptionsschicht 17 aus gesehen hinter der Wandlerschicht 2 ist ein Bildsensorarray 8 in geringem Abstand zu der Wandlerschicht 2 angeordnet, so dass das Bildsensorarray 8 die Wärmestrahlung 4 von dem Widerstandsheizelement 5 direkt, d. h. ohne Zwischenordnung einer Abbildungsoptik, erfasst. Die Wärmestrahlung 4 weist eine Intensitätsverteilung auf, die auf der mit der Spannungsquelle 7 hervorgerufenen Temperaturerhöhung des Widerstandsheizelements 5 und der damit überlagerten Temperaturerhöhung der Wandlerschicht 2 aufgrund der von der Absorptionsschicht 17 in Wärmeenergie umgewandelten elektromagnetischen Strahlung 3 beruht. Das als CCD-Chip ausgebildete Bildsensorarray 8 ist in der Lage, Wärmestrahlung 4 bereits in einem Wellenlängenbereich zu erfassen, der für das menschliche Auge noch nicht oder kaum sichtbar ist. Entsprechend muss mit der Spannungsquelle 7 und dem Widerstandsheizelement 5 die Temperaturerhöhung der Wandlerschicht 2 nicht so weit getrieben werden, wie bei dem Bildwandler gemäß Fig. 1, mit dem die Intensitätsverteilung der elektromagnetischen Strahlung 3 für das menschliche Auge sichtbar gemacht werden soll.

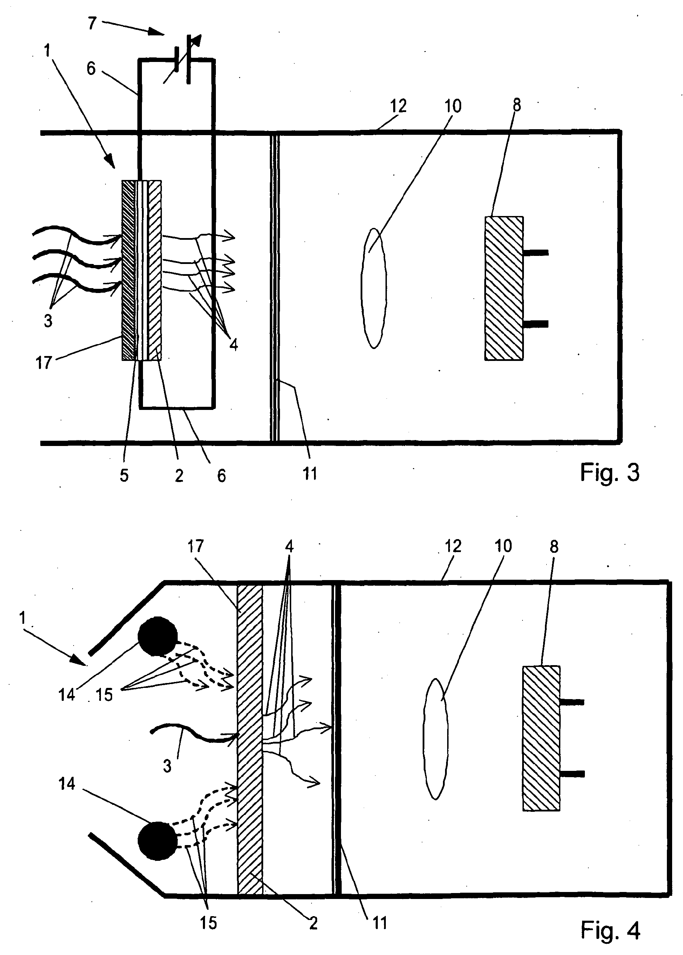

Die Ausführungsform des Bildwandlers gemäß **Fig. 3** unterscheidet sich von derjenigen gemäß Fig. 2 in Folgendem: Die Wandlerschicht 2 ist zusätzlich zu einem separaten Widerstandsheizelement 5 vorgesehen. Durch die zusätzliche Masse und die damit verbundene zusätzliche Wärmekapazität der Wandlerschicht 2 wird die zeitliche Dämpfung zwischen der Intensitätsverteilung der einfallenden elektromagnetischen Strahlung 3 und der Intensitätsverteilung der Wärmestrahlung 4 gezielt erhöht, um bei der Wärmestrahlung eine begrenzte zeitliche Mittelung über Intensitätsschwankungen der elektromagnetischen Strahlung 3 zu erhalten. Ohne diese Maßnahme kann die Ansprechzeit des Bildwandlers 1 sehr klein sein und im Bereich einer Hundertstelsekunde liegen. Durch die Erhöhung der Wärmekapazität der Wandlerschicht 2 kann die entsprechende Zeitkonstante gezielt hochgesetzt werden. Weiterhin ist der Abstand des Bildsensorarrays 8 von der Wandlerschicht 2 gezielt erhöht, um eine ungewollte Aufheizung des Bildsensorarrays 8 zu vermeiden. Dabei wird ein Wärmebild der Wandlerschicht 2 mit einer Optik 10 auf das Bildsensorarray 8 abgebildet. Als weitere Maßnahme, um das Bildsensorarray 8 thermisch von dem Widerstandsheizelement 5 abzuschirmen, ist ein optisches Wärmeschutzfilter 11 vorgesehen, das langwellige Wärmestrahlung, die mit dem Bildsensorarray 8 nicht erfassbar ist, außer dass es seine Temperatur und damit sein Dunkelrauschen erhöht, von dem Bildsensorarray 8 abschirmt. Letztlich ist in Fig. 3 ein Gehäuse 12 des Bildwandlers 1 wiedergegeben, das alle hier beschriebenen Bestandteile umschließt und Umgebungslicht von der Absorptionsschicht 17 und dem Bildsensorarray 8 abschirmt.

Die Ausführungsform des Bildwandlers gemäß **Fig. 4** weist folgende Unterschiede zu derjenigen gemäß Fig. 3 auf. Für das zusätzliche Aufheizen der Wandlerschicht 2, um die Wärmestrahlung 4 in einen für das Bildsensorarray 8 sichtbaren Bereich anzuheben, ist hier keine Heizeinrichtung in Form des Widerstandsheizelements 5 und der Spannungsquelle 7 sondern in Form einer Heizstrahlungsquelle 14 vorgesehen, die Heizstrahlung 15 auf die Wandlerschicht 2 hin emittiert. Wie die einfallende elektromagnetische Strahlung 8 wird die Heizstrahlung 15 von der Wandlerschicht 2 in Wärme umgewandelt und führt zu einer Temperaturerhöhung der Wandlerschicht 2, die jedoch weitgehend homogen und zumindest zeitlich konstant ist, so dass auch hier räumliche und zeitliche Schwankungen der Intensitätsverteilung der elektromagnetischen Strahlung 3 aufgrund von räumlichen und zeitlichen Schwankungen der Intensitätsverteilung der Wärmestrahlung 4 erfasst werden können.

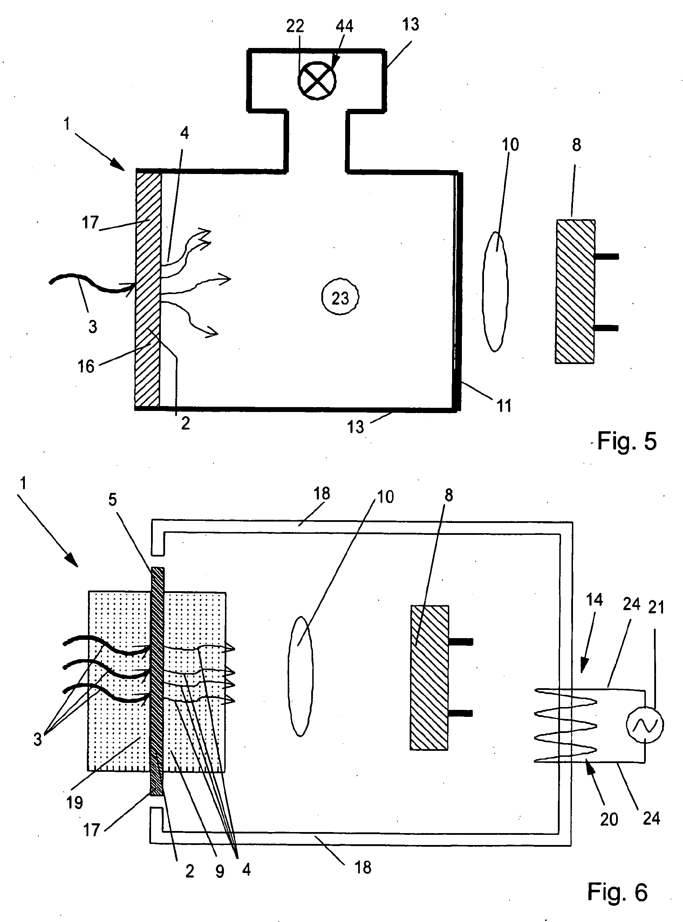

Die Ausführungsform des Bildwandlers 1 gemäß **Fig. 5**, die wie diejenige der nachfolgenden Fig. 6 ohne das in den Fig. 3 und 4 wiedergegebene Gehäuse dargestellt ist, obwohl auch sie ein solches Gehäuse aufweisen kann, weist eine Mikrowellenantenne 22 als Heizstrahlungsquelle 14 auf. Dabei ist die Mikrowellenantenne 22 in einem Mikrowellenresonator 13 vorgesehen, dessen Wandung teilweise von der Wandlerschicht 2 und teilweise auch von dem Wärmeschutzfilter 11 ausgebildet wird. Die Wandlerschicht 2 weist dabei eine solche Zusammensetzung auf, dass selektiv sie durch die Mikrowellenstrahlung von der Mikrowellenantenne 22 erwärmt wird. In dem Innenraum 23 des Mikrowellenresonators 13 kann ein Vakuum vorgesehen sein, um die Bildung von Hitzeschlieren in einem an die Wandlerschicht 2 angrenzenden Gas oder das Auftreten anderer Effekte aufgrund von Konvektion in einem solchen Gas zu verhindern. Weiterhin ist die Absorptionsschicht, die hier von der Wandlerschicht 2 ausgebildet ist, an ihrer Oberfläche 16 für den Wellenlängenbereich der elektromagnetischen Strahlung 3 teilverspiegelt, um bewusst nur einen Teil der elektromagnetischen Strahlung 3 in Wärme umzuwandeln. Der reflektierte Rest der der elektromagnetischen Strahlung 3 kann anderweitig verwendet werden, wobei dieser Rest den wesentlichen Anteil der einfallenden elektromagnetischen Strahlung 3 ausmachen kann und auch die Intensitätsverteilung dieses Rests durch die Erfassung der Wärmestrahlung 4 mit dem Bildsensorarray 8 bekannt ist.

Bei der Ausführungsform gemäß **Fig. 6** ist die Wandlerschicht 2 zwischen zwei Trägersubstraten 9 und 19 angeordnet, wobei das auf der Seite der einfallenden elektromagnetischen Strahlung 3 vorgesehene Trägersubstrat 19 für die elektromagnetische Strahlung 19 und das auf der anderen Seite angeordnete Trägersubstrat 9 für die Wärmestrahlung 4 transparent ist. Die Trägersubstrate 9 und 19 bewirken eine thermische Isolierung der Wandlerschicht 2 gegenüber ihrer Umgebung, um mögliche Konvektionseffekte zu unterdrücken. Zudem dienen sie auch zur Einstellung der Zeitkonstante bei der Wandlung der Intensitätsverteilung der elektromagnetischen Strahlung 3 in diejenige der Wärmestrahlung 4. Darüber hinaus skizziert Fig. 6 eine induktive Erhöhung der Temperatur der Wandlerschicht 2, die hier auch zugleich als Absorptionsschicht 17 dient. Hierzu ist eine Heizstrahlungsquelle 14 in Form einer Wechselspannungsquelle 21 vorgesehen, die über elektrische Anschlüsse 24 an eine Induktionswicklung 20 angeschlossen ist und mit dieser ein magnetisches Wechselfeld in einem Joch 18 erregt. Die Wandlerschicht 2 ist zwischen den freien Enden des Jochs 18 angeordnet, so dass bei geeigneter Ausbildung der Wandlerschicht 2 das magnetische Wechselfeld, das eine Heizstrahlung darstellt, Wirbelströme in der Wandlerschicht 2 induziert. Da die Wandlerschicht 2 hier zugleich als Widerstandsheizelement 5 ausgebildet ist, wandelt sie die Wirbelströmung in Wärme um, die zu ihrer gewünschten Erwärmung führen.

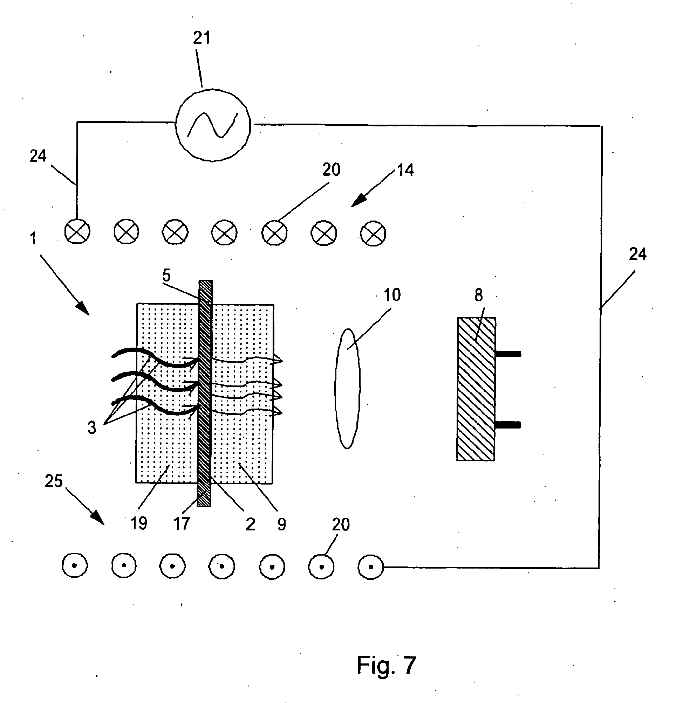

Die Ausführungsform gemäß **Fig. 7** unterscheidet sich von derjenigen gemäß Fig. 6 durch einen Verzicht auf eine ringförmig geschlossene Führung für das magnetische Wechselfeld. Stattdessen ist die als Widerstandsheizelement 5 ausgebildete Wandlerschicht 2 direkt in der hier als Luftspute 25 ausgebildeten Induktionswicklung 20 angeordnet. Diese Anordnung ist mit zwei Vorteilen gegenüber derjenigen gemäß Fig. 6 verbunden. Zum einen ist das magnetische Feld einschließlich seiner Änderungen über den Querschnitt der Luftspule 25 sehr homogen, so dass die Wandlerschicht auch sehr homogen aufgeheizt wird. Zum anderen verlaufen die Feldlinien in der Luftspule parallel zu deren Achse, also senkrecht zu der Wandlerschicht 2, so dass parallel zu der Haupterstreckungsebene der Wandlerschicht 2 fließende und damit geometrisch unbehinderte Wirbelströme induziert werden.

### BEZUGSZEICHENLISTE

- 1: Bildwandler
- 2: Wandlerschicht
- 3: Strahlung
- 4: Wärmestrahlung
- 5: Widerstandsheizelement
- 6: Anschluss
- 7: Spannungsquelle
- 8: Bildsensorarray
- 9: Trägersubstrat
- 10: Optik

- 11: Wärmeschutzfilter
- 12: Gehäuse
- 13: Mikrowellenresonator
- 14: Heizstrahlungsquelle
- 15: Heizstrahlung
- 16: Oberfläche
- 17: Absorptionsschicht
- 18: Joch
- 19: Trägersubstrat
- 20: Induktionswicklung

- 21: Wechselspannungsquelle
- 22: Mikrowellenantenne
- 23: Innenraum
- 24: Anschluss
- 25: Luftspule

## Patentansprüche

1. Bildwandler zur Sichtbarmachung einer Intensitätsverteilung einer elektromagnetischen Strahlung mit einer Wandlerschicht, die eine der Intensitätsverteilung der einfallenden elektromagnetischen Strahlung entsprechende Temperaturverteilung annimmt, und mit einer Heizeinrichtung zum Erhöhen der Temperatur der Wandlerschicht, **dadurch gekennzeichnet, dass** die Wandlerschicht (2) eine optisch erfassbare Wärmestrahlung mit einer der Temperaturverteilung entsprechenden Intensitätsverteilung abstrahlt und dass die Heizeinrichtung (5, 7; 14) zum Verschieben der Wärmestrahlung zu kürzeren Wellenlängen hin vorgesehen ist.

2. Bildwandler nach Anspruch 1, **dadurch gekennzeichnet, dass** die Wandlerschicht (2) zugleich als Absorptionsschicht (17) ausgebildet ist, die die einfallende elektromagnetische Strahlung zumindest teilweise in Wärme und so die Intensitätsverteilung der einfallenden elektromagnetischen Strahlung in eine Temperaturverteilung über der Wandlerschicht (2) umwandelt.

3. Bildwandler nach Anspruch 1, **dadurch gekennzeichnet, dass** eine zusätzliche Absorptionsschicht (17) neben der Wandlerschicht (2) vorgesehen ist, wobei die Absorptionsschicht (17) die einfallende elektromagnetische Strahlung zumindest teilweise in Wärme und so die Intensitätsverteilung der einfallenden elektromagnetischen Strahlung in eine Temperaturverteilung umwandelt, die sie auf die Wandlerschicht (2) überträgt.

4. Bildwandler nach einem der Ansprüche 1 bis 3, **dadurch gekennzeichnet, dass** die Heizeinrichtung (5, 7; 14) ohne die sichtbar zu machende Intensitätsverteilung eine zeitlich konstante Temperaturverteilung über der Wandlerschicht (2) bewirkt.

5. Bildwandler nach einem der Ansprüche 1 bis 4, **dadurch gekennzeichnet, dass** die Heizeinrichtung (5, 7; 14) ohne die sichtbar zu machende Intensitätsverteilung eine homogene Temperaturverteilung über der Wandlerschicht (2) bewirkt.

6. Bildwandler nach einem der Ansprüche 1 bis 5, **dadurch gekennzeichnet, dass** die Heizeinrichtung (5, 7; 14) bezüglich ihrer Heizleistung einstellbar ist.

7. Bildwandler nach einem der Ansprüche 1 bis 6, **dadurch gekennzeichnet, dass** die Heizeinrichtung eine Heizstrahlungsquelle (14) aufweist.

8. Bildwandler nach einem der Ansprüche 1 bis 7, **dadurch gekennzeichnet, dass** die Heizeinrichtung ein Widerstandsheizelement (5) aufweist.

9. Bildwandler nach Anspruch 8, **dadurch gekennzeichnet, dass** die Wandlerschicht (2) das Widerstandsheizelement (5) ausbildet.

10. Bildwandler nach einem der Ansprüche 1 bis 9, **dadurch gekennzeichnet, dass** die Wandlerschicht (2) auf einem transparenten Trägersubstrat (9; 19) angeordnet ist.

11. Bildwandler nach einem der Ansprüche 1 bis 10, **dadurch gekennzeichnet, dass** die Wandlerschicht (2) zumindest einseitig von Gas oder Vakuum begrenzt ist.

12. Bildwandler nach einem der Ansprüche 1 bis 11, **dadurch gekennzeichnet, dass** die Wandlerschicht (2) teilverspiegelt ist.

13. Bildwandler nach einem der Ansprüche 1 bis 12, **dadurch gekennzeichnet, dass** ein Bildsensorarray (8) vorgesehen ist, auf das ein Wärmebild der Wandlerschicht (2) abgebildet wird.

14. Bildwandler nach Anspruch 13, **dadurch gekennzeichnet, dass** eine Optik (10) vorgesehen ist, die das Wärmebild der Wandlerschicht (2) auf das Bildsensorarray (8) abbildet.

15. Bildwandler nach Anspruch 13 oder 14, **dadurch gekennzeichnet, dass** zwischen der Wandlerschicht (2) und dem Bildsensorarray (8) ein optisches Wärmeschutzfilter (11) vorgesehen ist.

16. Bildwandler nach einem der Ansprüche 13 bis 15, **dadurch gekennzeichnet, dass** das Bildsensorarray (8) in Richtung der einfallenden elektromagnetischen Strahlung (3) hinter der Wandlerschicht (2) vorgesehen ist.

17. Bildwandler nach einem der Ansprüche 13 bis 16, **dadurch gekennzeichnet, dass** das Bildsensorarray (8) ein CCD-Chip ist.

## Claims

1. Image converter for visualizing an intensity distribution of an electromagnetic radiation, the image converter comprising a converter layer which adopts a temperature distribution corresponding to the intensity distribution of the incident electromagnetic radiation, and a heating device for increasing the temperature of the converter layer, **characterized in that** the converter layer (2) emits an optically detectable heat radiation having an intensity distribution corresponding to the temperature distribution, and that the heating device (5, 7; 14) is provided for shifting the heat radiation towards shorter wave lengths.

2. Image converter according to claim 1, **characterized in that** the converter layer (2) is also formed as an absorption layer (17) which at least partially converts the incident electromagnetic radiation into heat and thus the intensity distribution of the incident electromagnetic radiation into a temperature distribution over the converter layer (2),

3. Image converter according to claim 1, **characterized in that** an additional absorption layer (17) is provided besides the converter layer (2), wherein the absorption layer (17) at least partially converts the incident electromagnetic radiation into heat and thus the intensity distribution of the incident electromagnetic radiation into a temperature distribution which it transfers onto the converter layer (2).

4. Image converter according to any of the claims 1 to 3, **characterized in that** the heating device (5, 7; 14), without the intensity distribution to be made visible, generates a temporally constant temperature distribution over the converter layer (2).

5. Image converter according to any of the claims 1 to 4, **characterized in that** the heating device (5, 7; 14), without the intensity distribution to be made visible, generates a homogeneous temperature distribution over the converter layer (2).

6. Image converter according to any of the claims 1 to 5, **characterized in that** the heating device (5, 7; 14) is adjustable with regard to its heating power.

7. Image converter according to any of the claims 1 to 6, **characterized in that** the heating device comprises a heating radiation source (14).

8. Image converter according to any of the claims 1 to 7, **characterized in that** the heating device comprises a resistive heating element (5).

9. Image converter according to claim 8, **characterized in that** the converter layer (2) forms the resistive heating element (5).

10. Image converter according to any of the claims 1 to 9, **characterized in that** the converter layer (2) is arranged on a transparent carrier substrate (9; 19).

11. Image converter according to any of the claims 1 to 10, **characterized in that** the converter layer (2) is delimited by gas or vacuum on at least one of its sides.

12. Image converter according to any of the claims 1 to 11, **characterized in that** the converter layer (2) is partially mirrored.

13. Image converter according to any of the claims 1 to 12, **characterized in that** an image sensor array (8) is provided onto which the thermal image of the converter layer (2) is imaged.

14. Image converter according to claim 13, **characterized in that** an optic (10) is provided which images the thermal image of the converter layer (2) onto the image sensor array (8).

15. image converter according to claim 13 or 14, **characterized in that** an optical heat protection filter (11) is provided between the converter layer (2) and the image sensor array (8).

16. Image converter according to any of the claims 13 to 15, **characterized in that** the image sensor array (8), in the direction of the incident electromagnetic radiation (3), is arranged behind the converter layer (2).

17. Image converter according to any of the claims 13 to 16, **characterized in that** the image sensor array (8) is a CCD-chip.

## Revendications

1. Convertisseur d'images pour la visualisation d'une répartition d'intensité d'un rayonnement électromagnétique comprenant une couche de conversion, qui suppose une répartition de température correspondant à la répartition d'intensité du rayonnement électromagnétique incident, et un dispositif de chauffage pour l'élévation de la température de la couche de conversion, **caractérisé en ce que** la couche de conversion (2) diffuse un rayonnement de chaleur visuellement détectable avec une répartition d'intensité correspondant à la répartition de température et **en ce que** le dispositif de chauffage (5, 7 ; 14) est prévu pour le déplacement du rayonnement de chaleur vers des longueurs d'ondes plus courtes,

2. Convertisseur d'images selon la revendication 1, **caractérisé en ce que** la couche de conversion (2) est conçue en même temps comme couche d'absorption (17), qui convertit le rayonnement électromagnétique incident au moins en partie en chaleur et convertit ainsi la répartition d'intensité du rayonnement électromagnétique incident en une répartition de température au-dessus de la couche de conversion (2).

3. Convertisseur d'images selon la revendication 1, **caractérisé en ce qu'**une couche d'absorption (17) supplémentaire est prévue à côté de la couche de conversion (2), la couche d'absorption (17) convertissant le rayonnement électromagnétique incident au moins en partie en chaleur et convertissant ainsi la répartition d'intensité du rayonnement électromagnétique incident en une répartition de température incidente, qui la transmet à la couche de conversion (2).

4. Convertisseur d'images selon l'une quelconque des revendications 1 à 3, **caractérisé en ce que** le dispositif de chauffage (5, 7 ; 14) entraîne, sans la répartition d'intensité à visualiser, une répartition de température constante dans le temps au-dessus de la couche de conversion (2).

5. Convertisseur d'images selon l'une quelconque des revendications 1 à 4, **caractérisé en ce que** le dispositif de chauffage (5, 7 ; 14) entraîne, sans la répartition d'intensité à visualiser, une répartition de température homogène au-dessus de la couche de conversion (2).

6. Convertisseur d'images selon l'une quelconque des revendications 1 à 5, **caractérisé en ce que** le dispositif de chauffage (5, 7 ; 14) peut être réglé en ce qui concerne sa puissance de chauffage.

7. Convertisseur d'images selon l'une quelconque des revendications 1 à 6, **caractérisé en ce que** le dispositif de chauffage présente une source de rayonnement de chauffage (14).

8. Convertisseur d'images selon l'une quelconque des revendications 1 à 7, **caractérisé en ce que** le dispositif de chauffage présente un élément de chauffage à résistance (5).

9. Convertisseur d'images selon la revendication 8, **caractérisé en ce que** la couche de conversion (2) forme l'élément de chauffage à résistance (5).

10. Convertisseur d'images selon l'une quelconque des revendications 1 à 9, **caractérisé en ce que** la couche de conversion (2) est disposée sur un substrat porteur (9 19) transparent.

11. Convertisseur d'images selon l'une quelconque des revendications 1 à 10, **caractérisé en ce que** la couche de conversion (2) est délimitée au moins sur un côté par du gaz ou du vide.

12. Convertisseur d'images selon l'une quelconque des revendications 1 à 11, **caractérisé en ce que** la couche de conversion (2) est revêtue partiellement d'une couche réfléchissante.

13. Convertisseur d'images selon l'une quelconque des revendications 1 à 12, **caractérisé en ce qu'**il est prévu un capteur d'images (8) sur lequel est reproduite une image thermique de la couche de conversion (2).

14. Convertisseur d'images selon la revendication 13, **caractérisé en ce qu'**il est prévu une optique (10) qui reproduit l'image thermique de la couche de conversion (2) sur le capteur d'images (8).

15. Convertisseur d'images selon la revendication 13 ou 14, **caractérisé en ce qu'**un filtre optique antithermique (11) est prévu entre la couche de conversion (2) et le capteur d'images (8).

16. Convertisseur d'images selon l'une quelconque des revendications 13 à 15, **caractérisé en ce que** le capteur d'images (8) est prévu en direction du rayonnement (3) électromagnétique incident derrière la couche de conversion (2).

17. Convertisseur d'images selon l'une quelconque des revendications 13 à 16, **caractérisé en ce que** le capteur d'images (8) est une puce CCD.
